(19) Europäisches Patentamt
European Patent Office
Office européen des brevets

(11) **EP 1 034 107 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **98947377.2**

(22) Anmeldetag: **01.08.1998**

(51) Int Cl.7: **B62D 5/04**

(86) Internationale Anmeldenummer:
**PCT/DE98/02216**

(87) Internationale Veröffentlichungsnummer:
**WO 99/29557 (17.06.1999 Gazette 1999/24)**

(54) **VERFAHREN ZUR BETÄTIGUNG EINES STEER-BY-WIRE-LENKANTRIEBS**

METHOD FOR ACTUATING A STEER-BY-WIRE STEERING DEVICE

PROCEDE POUR ACTIONNER UN ORGANE DE COMMANDE DE DIRECTION PAR CABLES

(84) Benannte Vertragsstaaten:
**DE FR GB**

(30) Priorität: **06.12.1997 DE 19754258**

(43) Veröffentlichungstag der Anmeldung:
**13.09.2000 Patentblatt 2000/37**

(73) Patentinhaber: **ROBERT BOSCH GMBH**
**70442 Stuttgart (DE)**

(72) Erfinder:
• **HACKL, Matthias**
**D-71665 Vaihingen (DE)**
• **KRAEMER, Wolfgang**
**D-70191 Stuttgart (DE)**

(56) Entgegenhaltungen:
**EP-A- 0 521 450          US-A- 4 741 409**

• **PATENT ABSTRACTS OF JAPAN vol. 018, no. 363 (M-1635), 8. Juli 1994 -& JP 06 094107 A (MITSUBISHI ELECTRIC CORP), 5. April 1994**

**Beschreibung**

Stand der Technik

Die Erfindung betrifft ein Verfahren zur Betätigung eines "Steer-by-Wire"-Fahrzeuglenkantriebs mittels wenigstens zwei ansteuerbaren redundanten Stellmotoren und diesen nachgeschalteten Getrieben, durch welche ein mit den Rädern verbundenes Getriebeelement simultan angetrieben wird.

Bei Steer-by-Wire-Lenkantrieben ist aus Sicherheitsgründen entweder eine sogenannte mechanische Rückfallebene oder es sind redundante Stellmotoren erforderlich. Die mechanische Rückfallebene kann beispielsweise durch eine bei Ausfall der Stellmotoren direkte Kraftübertragung vom Lenkrad auf die zu lenkenden Räder erfolgen. Bei redundanten Stellmotoren kann ein Teil dieser Motoren die Aufgabe des anderen Teils in Notsituationen übernehmen. Ein Steer-by-Wire-Antrieb, welcher redundante Stellmotoren aufweist, geht beispielsweise aus der US 4 741 409, welche eine Einzelradsteuerung beschreibt, hervor (nächstkommender stand der Technik).

Wie bei allen Lenksystemen ist auch bei derartigen Steer-by-Wire-Lenkantrieben ein eventuell auftretendes Lenkspiel problematisch.

Aufgabe der Erfindung ist es daher, ein gattungsgemäßes Verfahren zur Betätigung eines "Steer-by-Wire"-Lenkantriebs derart weiterzubilden, daß eventuell auftretendes Lenkspiel weitestgehend vermieden wird, wobei hierbei möglichst wenig störende Geräusche entstehen sollen.

Vorteile der Erfindung

Die Aufgabe wird durch ein Verfahren mit den Merkmalen des Anspruchs 1 gelöst. Weitere Ausgestaltungen der Erfindung sind in den abhängigen Ansprüchen enthalten. Bei dem Verfahren werden zur Betätigung eines Steer-by-Wire-Lenkantriebs die beiden Stellmotoren mit den diesen nachgeschalteten Getrieben derart unabhängig voneinander angesteuert, daß durch sie gleichzeitig gleichgerichtete Antriebskräfte unterschiedlichen Betrags oder entgegengesetzt gerichtete Antriebskräfte gleichen oder unterschiedlichen Betrags erzeugt werden.

Durch die Möglichkeit, die beiden Stellmotoren unabhängig voneinander so anzusteuern, daß sie gleichzeitig gleichgerichtete Antriebskräfte unterschiedlichen Betrags oder insbesondere auch entgegengesetzt gerichtete Antriebskräfte gleichen oder unterschiedlichen Betrags erzeugen, wird auf besonders vorteilhafte Weise ermöglicht, ein Lenkspiel kontinuierlich auszugleichen.

Um eine möglichst optimale Kompensation des Lenkspiels zu erzielen, ist vorteilhafterweise vorgesehen, daß die Motoren so angesteuert werden, daß im Normalbetriebszustand ein Lenkeinschlag in eine Richtung nur durch Betätigen eines Motors hervorgerufen wird, während simultan hierzu eine Betätigung des anderen Motors in die entgegengesetzte Richtung zur Erzeugung eines definierten Bremsmoments erfolgt. Auf diese Weise wird der gesamte Lenkantrieb gewissermaßen verspannt, wodurch ein Lenkspiel sehr wirkungsvoll verhindert wird.

Um das Bremsmoment oder der Bremskraft unterschiedlichen Lenkanforderungen anpassen zu können, die insbesondere durch unterschiedliche Fahr-, Straßenzustände u.dgl. hervorgerufen werden, ist vorteilhafterweise vorgesehen, daß die Größe des Bremsmoments oder der Bremskraft veränderbar ist.

Bei einer weiteren sehr vorteilhaften Ausführungsform ist vorgesehen, daß das Bremsmoment so eingestellt wird, daß sich über sämtliche Lenkwinkeleinschläge eine konstante Differenz der von den beiden Motoren erzeugten Antriebskräfte einstellt. Aufgrund dieser, eine Verspannungskraft darstellenden Differenz der Antriebskräfte wird eine kontinuierliche Verspannung des Lenkantriebs im Normalbetrieb ermöglicht.

Um diese Verspannung noch weiter zu verbessern und um insbesondere auch ein Spiel bei sehr schnellen Stellbewegungen zu verhindern, ist bei einer vorteilhaften Ausführungsform vorgesehen, daß den von den beiden Stellmotoren erzeugten Kräften jeweils mit entgegengesetzten Vorzeichen ein Kraftanteil überlagert wird, der der Differenzdrehzahl der beiden Stellmotoren proportional ist. Hierdurch werden insbesondere auch Differenzschwingungen der Motoren, die infolge von Elastizitäten von Bauteilen der Motoren sowie der Getriebe entstehen können, sehr wirkungsvoll gedämpft.

Rein prinzipiell können als Stellmotoren die unterschiedlichsten Motoren verwendet werden. So sind beispielsweise Hydromotoren denkbar. Vorteilhafterweise werden als Stellmotore Elektromotoren verwendet.

Zeichnung

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

Fig. 1   schematisch einen Steer-by-Wire-Lenkantrieb, bei dem das erfindungsgemäße Verfahren zum Einsatz kommt;

Fig. 2   schematisch ein ein erstes Ausführungsbeispiel des erfindungsgemäßen Verfahrens erläuterndes Kräftediagramm;

Fig. 3   schematisch ein ein weiteres Ausführungsbeispiel des erfindungsgemäßen Verfahrens erläuterndes Kräftediagramm und

Fig. 4    schematisch ein ein wiederum anderes Ausführungsbeispiel des erfindungsgemäßen Verfahrens erläuterndes Kräftediagramm.

Beschreibung der Ausführungsbeispiele

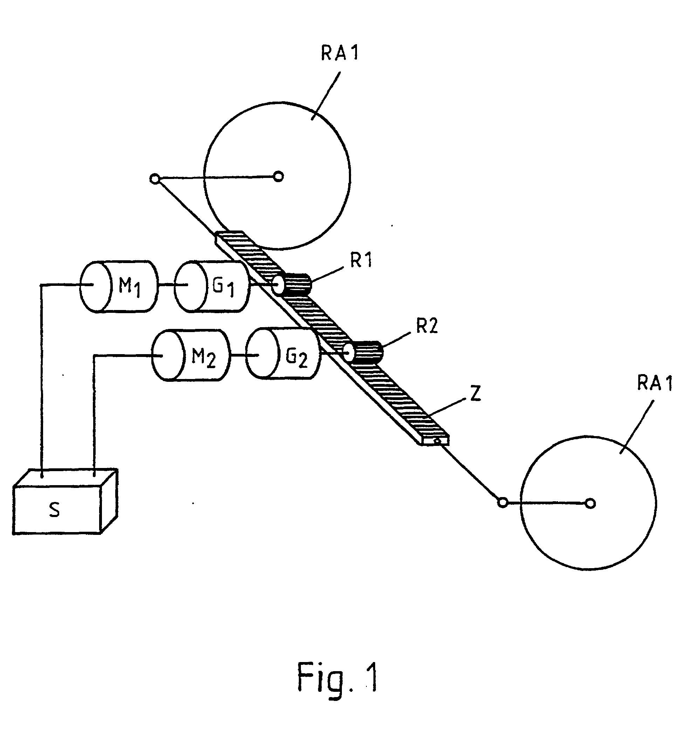

Ein schematisch in Fig. 1 dargestellter Steer-by-Wire-Lenkantrieb umfaßt zwei Stellmotoren M1, M2, beispielsweise Elektromotoren, denen jeweils ein Getriebe G1, G2 nachgeschaltet ist, welche über Ritzel R1, R2 simultan ein mit den Rädern RA1, RA2 verbundenes Getriebeelement in Form einer Lenkbewegungen an Rädern RA1, RA2 hervorrufenden Zahnstange Z antreiben. Die beiden Motoren M1, M2 sind durch eine Steuerschaltung S ansteuerbar.

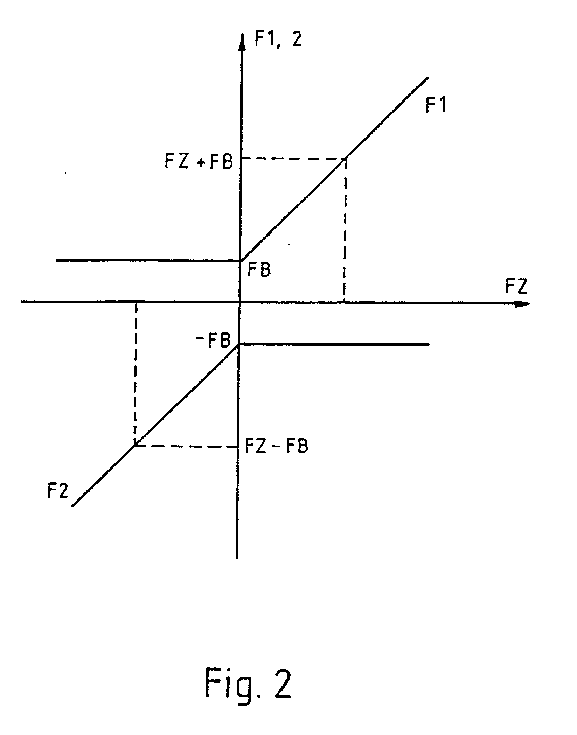

Verfahren zur Beseitigung von eventuell auftretendem Lenkspiel werden nachfolgend anhand der Fig. 2 bis 4 beschrieben.

In den Figuren 2 bis 4 sind die von den Stellmotoren M1 und M2 erzeugten Kräfte F1, F2 jeweils über der Zahnstangenkraft FZ aufgetragen.

Wie aus Fig. 2 hervorgeht, wird, wenn die Zahnstangenkraft FZ positiv sein soll, der Stellmotor M1 so angesteuert, daß über das ihm nachgeschaltete Getriebe G1 und das von diesem betätigte Ritzel R1 auf die Zahnstange Z eine Zahnstangenkraft FZ erzeugt wird, die im wesentlichen proportional zur Antriebskraft F1 ist. Simultan hierzu wird der Stellmotor M2 so angesteuert, daß er über das ihm nachgeschaltete Getriebe G2 und das Ritzel R2 auf die Zahnstange eine konstante Bremskraft -FB erzeugt. Dabei ist zu beachten, daß der Motor M1 auf die Zahnstange Z eine Kraft in eine Richtung ausübt, beispielsweise in Fig. 1 nach links, wohingegen der Stellmotor M2 eine Kraft in die dazu entgegengesetzte Richtung, beispielsweise in Fig. 1 nach rechts erzeugt. Bei einem Lenkeinschlag nach links wird auf diese Weise durch den Stellmotor M1 über das Getriebe G1 und das Ritzel R1 auf die Zahnstange Z eine nach links gerichtete Antriebskraft F1 erzeugt, während gleichzeitig eine nach rechts gerichtete Bremskraft FB von dem Antriebsmotor M2 erzeugt wird. Umgekehrt wird bei einem Lenkeinschlag nach rechts von dem Antriebsmotor M2 und dem ihm nachgeschalteten Getriebe G2 sowie dem Ritzel R2 auf die Zahnstange Z eine Antriebskraft F2 nach rechts erzeugt, während gleichzeitig von dem Antriebsmotor M1 eine Bremskraft FB nach links erzeugt wird.

Hierdurch werden in dem Lenkantrieb definierte Verspannungskräfte erzeugt, nämlich bei einem Lenkeinschlag nach links eine nach rechts gerichtete Verspannungskraft und bei einem Lenkeinschlag nach rechts eine linksgerichtete Verspannungskraft. Aufgrund dieser Verspannungskräfte wird erreicht, daß die Zahnräder der Getriebe und die Ritzel R1, R2 immer an denselben Zahnflanken der Zahnstange Z anliegen, wodurch Spiele keine Wirkung haben. Bei dem in Fig. 1 dargestellten Beispiel liegt das dem Stellmotor M1 nachgeschaltete Ritzel R1 immer an den linken, wohingegen das dem Stellmotor M2 nachgeschaltete Ritzel R2 immer an den rechten Zahnflanken der Zahnstange Z an.

Wenn beispielsweise eine Zahnstangenkraft in positive Richtung, um beispielsweise eine Lenkbewegung nach links zu bewerkstelligen, erforderlich ist, liefert der Stellmotor M1 und das ihm nachgeschaltete Getriebe G1 über das Ritzel R1 eine Motorkraft F1 = FZ + FB, wohingegen M2 eine Kraft F2 = -FB liefert, wie es aus Fig. 2 hervorgeht. Es versteht sich, daß jeder Stellmotor M1, M2 so große Kräfte erzeugen können muß, daß die maximale erforderliche Zahnstangenkraft FZmax erreichbar ist, d.h. es muß gelten: Fmax > FZmax + FB, wobei Fmax die Maximalkraft eines Stellmotors M1, M2 ist.

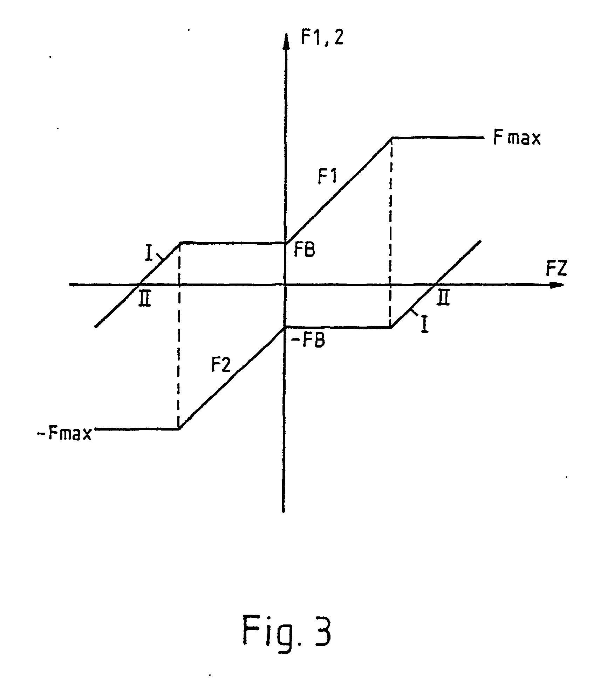

Wenn dann beispielsweise beim Lenken im Stand (bei schlechten Straßenverhältnissen) oder aufgrund anderer Umstände die einzelnen Stellmotoren M1, M2 nicht genügend hohe Kräfte erzeugen können, um einen Lenkeinschlag zu bewerkstelligen, kann die Betätigung des Lenkantriebs auf die in Verbindung mit Fig. 3 nachfolgend erläuterte Weise erfolgen. Wie aus Fig. 3 hervorgeht, kann die Bremskraft FB verändert, im in Fig. 3 dargestellten Falle verringert, werden, wenn die Antriebskraft der antreibenden Stellmotoren M1, M2 nicht ausreicht (Bereich I). Ist überhaupt keine Bremskraft mehr vorhanden (Punkte II), kann der im Normalbetriebszustand bremsende Stellmotor M1 oder M2 auch so angesteuert werden, daß er eine Antriebskraft in die gleiche Richtung erzeugt wie der jeweils im Normalbetriebszustand antreibende andere Motor. In diesem Falle wird jedoch ein eventuell vorhandenes Lenkspiel wirksam. Dieser Fall tritt nur in Ausnahmesituationen ein.

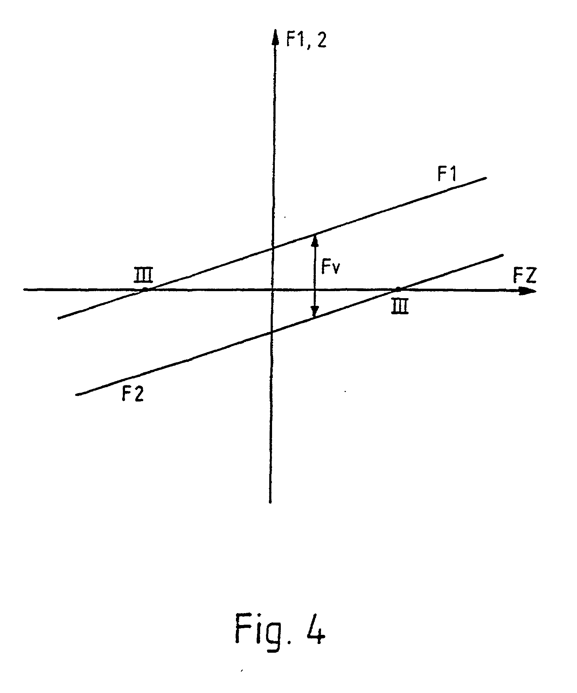

Bei einem wiederum anderen, im Zusammenhang mit Fig. 4 erläuterten Ausführungsbeispiel werden die beiden Motoren M1, M2 so angesteuert, daß über sämtliche Lenkwinkeleinschläge eine konstante Differenz der von den beiden Stellmotoren M1, M2 erzeugten Antriebskräfte eingestellt wird. Diese als Verspannungskraft FV wirkende Differenzkraft gleicht ein eventuell vorhandenes Lenkspiel im Normalbetriebszustand aus. Wie oben beschrieben, können auch in diesen Fällen bei außergewöhnlich hohen Zahnstangenkräften beide Motoren M1, M2 zum Antreiben verwendet werden, wobei allerdings beim Vorzeichenwechsel jeweils einer Motorkraft (vergl. Punkte III) eventuell vorhandene Lenkspiele wirksam werden.

Die oben beschriebenen Verspannungen können noch verbessert werden, indem den Motorkräften F1, F2 ein zusätzlicher Anteil überlagert wird, der von der Differenz der Drehzahlen der Motoren M1, M2 abhängt und die Differenzbewegung bedämpft. Bei einer proportionalen Aufschaltung ist dann:

$$F1' = F1 + K \times (\omega2 - \omega1),$$

$$F2' = F2 - K \times (\omega2 - \omega1);$$

wobei F1', F2' die von den Motoren M1, M2 erzeugten Kräfte darstellen, F1,2 der Kraftanteil der Motoren M1, M2 ist, der sich aus der Verspannungskennlinie ergibt, K ein Verstärkungsfaktor und ω1, ω2 die Drehzahlen der Motoren M1, M2 sind.

Die Addition derartiger Kraftanteile verhindert auch bei schnellen Stellbewegungen, daß Spiele wirksam werden. Außerdem werden Differenzschwingungen der Motoren, die infolge von Elastizitäten der Getriebebauteile, Wellen u.dgl. auftreten können, gedämpft.

Bei Ausfall eines Motors ist eine Verspannung nicht mehr möglich ist. In diesem Falle kann die Ansteuerung des noch funktionierenden Motors über ein Notlaufprogramm ohne Verspannung erfolgen.

Der besonders große Vorteil des obenbeschriebenen Verfahrens ist insbesondere darin zu sehen, daß bei der Konstruktion der Lenkantriebe nicht mehr auf Spielfreiheit geachtet werden muß. Dies hat zur Folge, daß bei der Fertigung größere Toleranzen zulässig sind, wodurch die Herstellungskosten erheblich verringert werden. Durch Ansteuerung der Motoren M1, M2 können die Verspannungskennlinien so gewählt und über Parameter modifiziert werden, daß entweder das Spiel unter keinen Umständen wirksam wird (Verspannung der in Fig. 2 dargestellten Kennlinie) oder ein Spiel nur bei extrem großen Lenkkräften kurzzeitig wirksam wird (vgl. Fig. 3, Fig. 4). Es können elektrische Motoren mit Vorzugsdrehrichtung verwendet werden, wobei die Vorzugsdrehrichtung der gewöhnlichen Treibrichtung des jeweiligen Motors entspricht. Hierdurch sind größere Motorkräfte erzeugbar oder kleinere Motoren verwendbar.

**Patentansprüche**

1. Verfahren zur Betätigung eines "Steer-by-Wire"-Fahrzeuglenkantriebs mittels wenigstens zwei ansteuerbaren redundanten Stellmotoren (M1, M2) und diesen nachgeschalteten Getrieben (G1, G2), durch welche ein mit den Rädern (RA1, RA2) verbundenes Getriebeelement (Z) simultan angetrieben wird, **dadurch gekennzeichnet, daß** die beiden Stellmotoren (M1, M2) derart unabhängig voneinander angesteuert werden, daß durch sie gleichzeitig sowohl gleichgerichtete Antriebskräfte unterschiedlichen Betrags als auch entgegengesetzt gerichtete Antriebskräfte (F1, F2) gleichen oder unterschiedlichen Betrags zur Einstellung einer eine Verspannkraft darstellenden Differenz der Antriebskräfte (F1, F2) erzeugt werden.

2. Verfahren nach Anspruch 1, **dadurch gekennzeichnet, daß** die Stellmotoren (M1, M2) so angesteuert werden, daß im Normalbetrieb ein Lenkeinschlag in eine Richtung nur durch Betätigen eines Stellmotors (M1 oder M2) hervorgerufen wird, während simultan hierzu eine Betätigung des anderen Stellmotors (M2 oder M1) in die entgegengesetzte Richtung zur Erzeugung eines definierten Bremsmoments bzw. einer definierten Bremskraft erfolgt.

3. Verfahren nach Anspruch 2, **dadurch gekennzeichnet, daß** die Größe des Bremsmoments bzw. der Bremskraft veränderbar ist.

4. Verfahren nach Anspruch 2 oder 3, **dadurch gekennzeichnet, daß** das Bremsmoment bzw. die Bremskraft so eingestellt werden, daß sich über sämtliche Lenkwinkeleinschläge eine konstante Differenz der von den beiden Stellmotoren (M1, M2) erzeugten Antriebskräfte (F1, F2) einstellt.

5. Verfahren nach einem der voranstehenden Ansprüche, **dadurch gekennzeichnet, daß** den von den beiden Stellmotoren (M1, M2) erzeugten Kräften jeweils mit entgegengesetztem Vorzeichen ein Kraftanteil überlagert wird, der der Differenzdrehzahl der Stellmotoren (M1, M2) proportional ist.

6. Verfahren nach einem der voranstehenden Ansprüche, **dadurch gekennzeichnet, daß** als Stellmotoren (M1, M2) Elektromotoren verwendet werden.

**Claims**

1. Method for activating a steer-by-wire vehicle steering drive by means of at least two redundant servomotors (M1, M2) which can be actuated and gear mechanisms (G1, G2) which are connected downstream of the latter and by means of which a gear mechanism element (Z) which is connected to the wheels (RA1, RA2) is simultaneously driven, **characterized in that** the two servomotors (M1, M2) are driven separately from one another in such a way that they simultaneously generate both driving forces in the same direction with different amounts and driving forces (F1, F2) in different directions with the same or with different amounts in order to set a difference between the driving forces (F1, F2) which constitutes a tensioning force.

2. Method according to Claim 1, **characterized in that** the servomotors (M1, M2) are actuated in such a way that during normal operation a steering lock in one direction is brought about only by activating a servomotor (M1 or M2), while simultaneously the other servomotor (M2 or M1) is activated in the opposite direction in order to generate a defined braking torque or a defined braking force.

3. Method according to Claim 2, **characterized in that** the magnitude of the braking torque or of the braking force can be varied.

4. Method according to Claim 2 or 3, **characterized in that** the braking torque or the braking force is set in such a way that a constant difference between the driving forces (F1, F2) generated by the two servomotors (M1, M2) is set over all the steering lock angles.

5. Method according to one of the preceding claims, **characterized in that** a force component, which is proportional to the difference between the rotational speeds of the servomotors (M1, M2), is superimposed, in each case with an opposite sign, on the forces generated by the two servomotors (M1, M2).

6. Method according to one of the preceding claims, **characterized in that** electric motors are used as the servomotors (M1, M2).

**Revendications**

1. Procédé pour actionner un entraînement de direction de véhicule du type « steer-by-wire » comportant au moins deux moteurs redondants commandables (M1, M2) et les transmissions qui leur font suite (G1, G2) et entraînent simultanément un élément de transmission (Z) relié aux roues (RA1, RA2) du véhicule,
   **caractérisé en ce que**
   les deux moteurs de positionnement (M1, M2) sont commandés indépendamment l'un de l'autre de manière à délivrer simultanément aussi bien des forces d'entraînement de même sens et de niveaux différents que des forces d'entraînement de sens opposés et de niveaux égaux ou différents pour régler la différence des forces d'entraînement (F1, F2) qui représente la force de contrainte.

2. Procédé selon la revendication 1,
   **caractérisé en ce que**
   les moteurs de positionnement (M1, M2) sont commandés de manière qu'en fonctionnement normal, un braquage de la direction n'est produit dans un certain sens qu'en actionnant un seul moteur de positionnement (M1 ou M2) tandis que, simultanément, l'autre moteur (M2 ou M1) est actionné dans le sens opposé pour produire un couple de freinage donc une force de freinage définie.

3. Procédé selon la revendication 2,
   **caractérisé en ce que**
   la grandeur du couple et donc de la force de freinage peut varier.

4. Procédé selon la revendication 2 ou 3,
   **caractérisé en ce que**
   le couple et donc la force de freinage sont réglés de manière à établir dans toute l'étendue angulaire de braquage une différence constante entre les forces d'entraînement (F1, F2) délivrées par les moteurs de positionnement (M1, M2).

5. Procédé selon l'une quelconque des revendications précédentes,
   **caractérisé en ce qu'**
   aux forces produites par les deux moteurs de positionnement (M1, M2), on superpose une fraction de force de signe opposé, qui est proportionnelle à la différence des vitesses des moteurs de positionnement (M1, M2).

6. Procédé selon l'une quelconque des revendications précédentes,
   **caractérisé en ce que**
   les moteurs de positionnement (M1, M2) sont des moteurs électriques.

Fig. 1

Fig. 2

Fig. 3

Fig. 4